# EUROPEAN PATENT APPLICATION

(11) **EP 4 026 603 A1**
(43) Date of publication of application: **13.07.2022**
(21) Application number: 21151237.1
(22) Date of filing: 12.01.2021
(51) Int. Cl.: B01D 53/04, B01D 53/26, B60T 17/00

(54) **DESICCANT CONTAINER, AIR DRYER CARTRIDGE AND AIR TREATMENT DEVICE**

(71) Applicant: KNORR-BREMSE Systeme für Nutzfahrzeuge GmbH, 80809 München (DE)
(72) Inventor: Oláh, Tibor, 6000 Kecskemét (HU); Tóth, Zoltán László, 6100 Kiskunfélegyháza (HU); Tormási, Zoltán, 6000 Kecskemét (HU)
(74) Representative: DTS Patent- und Rechtsanwälte Schnekenbühl und Partner mbB

(57) **Abstract**

The present invention relates to a desiccant container (10) for an air dryer cartridge (12) for a vehicle, especially utility vehicle, with at least one housing (14); with at least one accommodation volume (16) for accommodating at least one desiccant (18) comprising a plurality of desiccant beads, wherein the desiccant container (10) comprises at least one container cover (14a); and with at least one pretension device (20) supported at the container cover (14a), wherein the pretension device (20) comprises at least one pretension area (20a) for pretension, in a mounted state, at least one first part of the desiccant beads according to a first pretension direction (D1) and for pretension at least one second part of the desiccant beads according to a second pretension direction (D2) being opposite so the first pretension direction.

The present invention further relates to an air dryer cartridge for an air treatment device for a vehicle, especially utility vehicle, with at least one desiccant container (10) as mentioned above and relates to an air treatment device for a vehicle, especially utility vehicle, with at least one desiccant container (10) and with at least one air dryer cartridge as mentioned above, respectively.

## Description

The present invention relates to a desiccant container for an air dryer cartridge for a vehicle, especially utility vehicle, with at least one housing; with at least one accommodation volume for accommodating at least one desiccant comprising a plurality of desiccant beads, wherein the desiccant container comprises at least one container cover; and with at least one pretension device supported at the container cover.

Further, the present invention relates to an air dryer cartridge for an air treatment device for a vehicle, especially utility vehicle, with at least one desiccant container as mentioned above, and relates to an air treatment device for a vehicle, especially utility vehicle, with at least one desiccant container as well as with at least one air dryer cartridge as mentioned above, respectively.

In the field of vehicles and especially utility or commercial vehicles, usually pneumatic systems are used for brakes, suspension and other auxiliary systems, and the distribution of the air is handled by a multi-circuit protection valve that can divide the air provided by a compressor or the like, handle the different opening and closing pressures and the pressure limitation of each circuits and the circuit protection.

Before the pressurized air may be controlled this way, an important measure is to dry this air (as it still contains humidity of the atmosphere) provided by the compressor. This drying procedure is established by an air dryer cartridge being arranged between the compressor and the multi-circuit protection valve and providing dried and de-oiled air to the multi-circuit protection valve.

Such conventional air dryer cartridges are already known in the prior art.

DE 3208561 A1 shows an air-drying device having a connection housing on which a cap-shaped container is mounted, which accommodates a drying agent cartridge. For ease of changing the drying agent cartridge, a clamping bracket is used, which is swivellably mounted on the housing and can be swivelled over the container and fixed there.

DE 69210614 T2 discloses an air dryer control system in which the compressed air output of a compressor is dried by one of two air dryers connected in parallel. The purging and drying cycles of the air dryers are alternated by a timing and relay device.

EP 0933117 A1 discloses a shuttle valve for a gas drying system that cleans and dries a stream of unpurified pressurized gas received from a source thereof and supplied to a pneumatic system that uses such a purified pressurized air. The valve includes a housing that connects a drying assembly to a structure that conveys the unpurified pressurized air to the drying assembly.

US 5901464 A relates to a twin tower air drying system for cleaning and drying a stream of unpurified pressurized air including a centrifugal separator having a baffle horizontally disposed therein to generally separate the centrifugal chamber into an upper sub-chamber and a lower sub-chamber; a pair of cavities each containing desiccant media and a purge tube with a flapper valve thereover to close and restrict flow of air through the purge tube when air is flowing upwardly through the cavity, and to open and promote air flow through the purge tube when air is flowing downwardly through the cavity.

US 5961698 A discloses a twin tower gas drying system for cleaning and drying a stream of unpurified pressurized gas received from a source thereof for use of a pneumatic system. The drying system includes a manifold block provided with the plurality of ports. A separator and sump are connected to such a block and to one of the ports for initially separating moisture and particulates from such stream of unpurified gas, and for directing the remainder of the stream to the one port in the block.

Basically, the desiccant of all air dryer cartridges needs to be pretensioned as, during the lifetime of the air dryer cartridge, vibrations caused by the powertrain and by the actual operation of the vehicle generate wear and friction of the desiccant formed by multiple desiccant beads or balls staying in contact to each other. The mentioned vibrations cause friction, abrasion, wear, and powdering of the desiccant beads causing an overall volume loss of the desiccant (over a sufficient period of time) that has to be compensated by a tension or pressing force in order to generate stable desiccant conditions of the desiccant. According to the prior art, the desiccant pretension is working as follows: a desiccant cover is pushed downwards against the desiccant with its hole contacting surface by a compression spring supported by the air dryer housing and pressed against it. All of the desiccant beads were pushed downwards by the desiccant cover (compensation of the abrasion loss) in one pretension direction.

This solution requires a large number of the components and place. Further, a relatively high spring force is needed in order to push the whole area of the desiccant cover downwards contacting the desiccant. As a consequence, mechanical stress in the affected parts is increased.

It is therefore an object of the present invention to improve a desiccant container and an air dryer cartridge as mentioned above, in particular in that they are built up with less parts, weight, and building space and/or in that mechanical stresses in the affected parts are also reduced.

This object is solved according to the present invention with a desiccant container according to the features of claim 1. Correspondingly, a desiccant container for an air dryer cartridge for a vehicle, especially utility vehicle, is provided with at least one housing; with at least one accommodation volume for accommodating at least one desiccant comprising a plurality of desiccant beads, wherein the desiccant container comprises at least one container cover; and with at least one pretension device supported at the container cover, wherein the pretension device comprises at least one pretension area for pretension, in a mounted state, at least one first part of the desiccant beads according to a first pretension direction and for pretension at least one second part of the desiccant beads according to a second pretension direction being opposite so the first pretension direction.

The invention is based on the basic idea that, since a desiccant of desiccant container is set up by multiple desiccant balls or beads (e.g. hundreds or thousands) accommodated within the desiccant container, the desiccant beads have a sufficiently small diameter such that it may behave as a quasi-fluid (as a reaction to an external tension force). In other words, the desiccant beads have quasi-fluid properties. Consequently, a first part of the desiccant beads is pushed in the pretension direction (directly by the pretension device) and a second part of the desiccant beads is pushed, via the first part of the desiccant beads, in a direction substantially opposite to the pretension direction (indirectly by the pretension device).

Additionally, the container cover comprises, in the mounted state, at least one internal cover area facing in a direction of the desiccant, wherein the pretension area is smaller than the internal cover area. According to the present invention, this geometrical ratio and due to the quasi-fluidic behaviour of the beads, not the whole surface area of the desiccant needs to be pretensioned anymore. Thus, the first part of the beads is directly pushed or tensioned in the direction of tension (by the pretension device). Additionally, the second part of the desiccant beads is pretensioned by the first part of the desiccant beads into an opposite second pretension direction. This geometrical ratio further enables a stable, safe and reliable configuration of the pretension device and an efficient pretension force generation is provided. Also, a building space-saving arrangement is provided. Further, by providing a smaller pretension area compared to the prior art (where the whole area of the desiccant container cover is used for pretension the desiccant) less pretension force is needed resulting in less mechanical tensions of the pretension device and the desiccant container.

Also, the pretension device comprises at least one pretension piston, at least one spring and at least one supporting member, wherein, in a mounted state, the spring is arranged between the pretension piston and the supporting member. The supporting member enables a defined transmission of the reaction forces into the container cover caused by pretension of the desiccant and basically generated by the spring. Thus, the supporting member serves as an interface member between the spring and the housing of the air desiccant container and also serves as a defined supporting structure of a first end of the spring. The second end of the spring is supported by the pretension member itself such that a reliable, defined and stable pretension device is established.

Moreover, the container cover comprises at least one first guiding member and/or at least one second guiding member for axially guiding the pretension piston according to a longitudinal axis of the desiccant container. According to the invention, the pretension device is radially surrounded by the container cover. Thus, the simplest construction is to provide at least one guiding member at the cover such that the definiteness and precision of the axial guiding of the pretension device is increased. These advantages may be further increased if two guiding members are provided. This set up results in a more precise pretension of the desiccant such that the internal wear and friction of the plurality of desiccant beads is decreased.

Further, the first guiding member is formed as a hollow cylinder and the second guiding member is formed as a hollow cylinder, wherein first and second guiding member are arranged coaxially or eccentrically with each other. Hollow circular cylinders provide a very effective guiding geometry as it may be manufactured straight forward. Additionally, such a circular cylindric geometry enables an easy pairing of accommodated and guided pairing members as the pretension piston. Also, the guiding accuracy may be set up very easily by choosing proper tolerances well known to the person skilled in the art. Further, hollow circular cylinders provide a good mechanical stability with less internal mechanical tensions. The coaxial arrangement of the longitudinal axes of the first and second guiding member further increases the guiding performance in terms of definiteness, accuracy and stability (e.g. against tilting or jamming of the pretension piston). It is alternatively thinkable that the first and second guiding members are arranged eccentrically with each other. That is, the longitudinal axes of the first and second guiding member are arranged eccentrically with each other. This design enables more freedoms in the design of the first and second guiding member and/or the desiccant container.

On the other hand, the first guiding member and the second guiding member extending, in a mounted state, from the container cover in a direction of the desiccant. This geometrical arrangement provides an immersion of the first and second guiding member together with the pretension device into the desiccant. This immersion leads to an annular space between the outer guiding member (e.g. the second guiding member) and the desiccant container. As the desiccant has quasi-fluid characteristics (see discussion above), the pretension of the desiccant guides several desiccant beads into this annular space resulting in a space efficient overall arrangement together with a more homogeneous pretension of the desiccant beads.

In addition, the pretension piston comprises at least one piston plate for directly contacting and pretension the desiccant via the pretension area and comprises at least one piston guiding section protruding from the piston plate and extending, in a mounted state, in a direction of the container cover. Comparable to the first and second guiding members of the container cover, the piston plate and the piston guiding section are also arranged coaxially to each other resulting in comparable advantages as discussed above with regard to the first and second guiding members. Further, this design of the pretension piston results in an advantageous guiding possibility of the pretension piston together with a stiffer configuration. It is also conceivable that the pretension piston together with the piston plate and the piston guiding section is formed integrally.

Especially, the piston plate comprises at least one lateral wall forming a guiding surface for axial guiding the piston plate according to the longitudinal axis of the desiccant container. By a proper design of the lateral wall, particularly by choosing a sufficiently large length, the tilting tendency of the pretension piston may be decreased effectively. Further, the guiding accuracy and the definiteness may be increased by such a design.

Furthermore, the piston guiding section is accommodated and axially guided by the first guiding member according to the longitudinal axis of the desiccant container. As the pretension piston has at least two axial guiding interfaces, the tilting and clamping tendency of the pretension piston may be decreased significantly. Further, the guiding accuracy and definiteness may be further increased by such a design.

Moreover, the lateral wall is accommodated and axially guided by the second guiding member according to the longitudinal axis of the desiccant container. The same advantages according to the piston guiding section in connection with the first guiding member also apply with regard to the lateral wall being accommodated and axially guided by the second guiding member.

In addition, it is conceivable that the second guiding member comprises at least one end facing away from the container cover, wherein a plurality of guiding legs protrudes from this end into the accommodation volume. At the end of the lifetime of the desiccant, its volume decreases significantly due to wear and abrasion caused by the vibrations of the operation of the vehicle. Therefore, these guiding legs serve as an additional axial guiding section of the second guiding member in case of the decreased desiccant volume and a widely axial extended position of the pretension piston. Accordingly, even at the end of the lifetime of the desiccant, the guiding function works properly and the pretension of the desiccant is still guaranteed. Especially, the number of guiding legs is eight. Alternatively, the number of guiding legs may also be smaller (like seven, six, five, four, three or two guiding legs) or bigger (like nine, ten, eleven, twelve etc. guiding legs) than eight.

Besides, an air dryer cartridge for an air treatment device for a vehicle, especially utility vehicle, with at least one desiccant container as mentioned above is provided according to the invention. Often, air dryer cartridges are set up together with a base comprising several control valves for managing the dried and de-oiled air supplied by the air dryer cartridge. Usually, the air dryer cartridge is detachably fastened to this base as the desiccant performance of the desiccant beads decrease over the time and does not last the whole lifetime of the vehicle. Therefore, the air dryer cartridge has to be changed together with the desiccant container from time to time, wherein the design of a detachably mounted air dryer cartridge meets this condition properly.

According to the invention, an air treatment device for a vehicle, especially utility vehicle, with at least one desiccant container and with at least one air dryer cartridge each as mentioned above is also provided. The advantages and technical teachings as discussed with regard to the desiccant container and the air dryer cartridge as mentioned above, which are sub-units of the air treatment device, are also transferable to the air treatment device accordingly.

Further details and advantages of the present invention shall now be disclosed in an embodiment according to the invention in connection with the drawing.

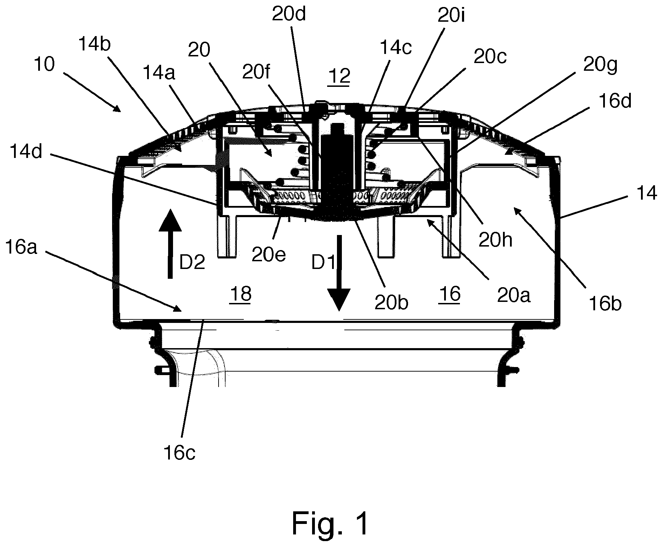

It is shown in
- Fig. 1: a schematic front sectional view of an embodiment of a desiccant container according to the invention for an air treatment device of a vehicle.

**Fig. 1** shows a schematic front sectional view of an embodiment of a desiccant container 10 according to the invention for an air dryer cartridge 12 of a vehicle.

The desiccant container 10 is also formed for an air treatment device for a utility vehicle (both not shown in Fig. 1).

Further, the desiccant container 10 is accommodated, in a mounted state, within the air dryer cartridge 12.

By means of the cartridge 12, the desiccant container 10 is removably mounted to the air treatment device (not shown in Fig. 1) according to the invention.

The desiccant container 10 comprises a desiccant container housing 14 and an accommodation volume 16 for accommodating a desiccant 18.

The accommodation volume 16 is formed by an accommodation area 16a and by an accommodation height 16b of the desiccant container 10.

The accommodation area 16a may be understood such that it represents an area that is bounded by the side wall or walls of the housing 14 of the desiccant container 10.

The accommodation area 16a extends within a plane being oriented vertically with respect to the longitudinal axis of the desiccant container housing 14.

As the accommodation volume 16 is not formed as a symmetrical and even geometrical body, the accommodation area 16a also depends on the accommodation height 16b, that extends, in the mounted state, from the bottom 16c of the accommodation volume 16 to its top 16d.

The desiccant 18 is formed by multiple loose desiccant beads (number of hundreds, thousands, ten thousands etc.) that are hold in space by the desiccant container 10.

Due to the sufficiently small bead size (average bead diameter is ca. 1 mm to ca. 5 or 10 mm), the desiccant 18 has quasi fluid characteristics.

The desiccant container housing 14 further comprises a container cover 14a.

The container cover 14a is fixedly or detachably mounted to the housing 14 and has substantially the shape of a dome.

Preferably, the container cover 14a is fixedly mounted to the housing 14 by an ultrasonic weld.

The container cover 14a comprises, in the mounted state, an internal cover area 14b facing in a direction of the desiccant 18.

The desiccant container 10 also comprises a pretension device 20 that is supported at the container cover 14a.

Further, the pretension device 20 comprises a pretension area 20a for pretension, in a mounted state, the desiccant 18 internally against the desiccant container 10.

According to Fig. 1, this pretension area 20a is smaller than the internal cover area 14b.

The pretension device 20 comprises a pretension piston 20b, a spring 20c and a supporting member 20d.

The internal cover area 14b may be understood such that it extends within the whole internal surface (also that one of the supporting member 20d) of the container cover 14 that is internally faced or oriented with regard to the desiccant 18.

In a mounted state, the spring 20c is arranged between the pretension piston 20b and the supporting member 20d.

The spring 20c is formed as a double conical or waisted helical compression spring.

The pretension piston 20b comprises a piston plate 20e for directly contacting and pretension the desiccant 18.

The piston plate 20e is formed as a bowl.

Further, the pretension piston 20b comprises piston guiding section 20f centrally protruding from the piston plate 20e and extending, in a mounted state, in a direction of the container cover 14a.

The piston guiding section 20f and piston plate 20e are arranged coaxially and formed integrally with each other.

Further, the piston guiding section 20f is formed by a solid circular cylinder.

The piston plate 20e further comprises a lateral wall 20g forming a guiding surface for axial guiding the piston plate 20 according to the longitudinal axis of the desiccant container 10.

The lateral wall 20g is formed as a hollow circular cylinder and is integrally connected to the piston plate 20e.

The lateral wall 20g together with the piston plate 20e stay in direct contact to the desiccant 18 und consequently form the pretension area 20a together.

The pretension area 20a may be interpreted as a projected area formed by the sum of the projected areas of the piston plate 20e and the lateral wall 20g, respectively, facing the desiccant 18.

According to Fig. 1, the supporting member 20d receives a first end of the spring 20c, wherein its second end is received by the piston plate 20e.

The supporting member 20d is built by a circular plate having two collars 20h, 20i and is integrally formed with the container cover 14a.

The first collar 20h protrudes from the supporting member 20d in a direction of the pretension piston 20b and forms a receiving portion for the first end of the spring 20c.

The second collar 20i protrudes from the supporting member 20d in an opposite direction, namely in the direction of the air dryer cartridge 12, and forms a receiving portion for the air dryer cartridge 12.

The container cover 14a further comprises a first guiding member 14c and a second guiding member 14d for axially guiding the pretension piston 20b according to a longitudinal axis of the desiccant container 10.

The first guiding member 14c is formed as a circular hollow cylinder and the second guiding member 14d is also formed as a circular hollow cylinder, wherein first and second guiding member 14c, 14d, especially regarding their longitudinal axes, are arranged coaxially.

Alternatively, it is possible that the first and second guiding members 14c, 14d are arranged eccentrically with each other.

That is, especially the longitudinal axes of the first and second guiding member 14c, 14d are arranged eccentrically with each other.

That is, the first guiding member 14c is radially arranged inside the second guiding member 14d.

The second guiding member 14d is formed such that the whole pretension device 20 is radially accommodated by the second guiding member 14d.

In addition, the second guiding member 14d comprises an end facing away from the container cover 14a, wherein a plurality of guiding legs protrudes from this end into the accommodation volume 16.

Especially, the number of guiding legs may be eight.

Alternatively, the number of guiding legs may also be smaller (like seven, six, five, four, three or two guiding legs) or bigger (like nine, ten, eleven, twelve etc. guiding legs) than eight.

As further can be depicted by Fig. 1, the piston guiding section 20f is accommodated and axially guided by the first guiding member 14c according to the longitudinal axis of the desiccant container housing 14.

Accordingly, the lateral wall 20g of the pretension piston 20b is accommodated and axially guided by the second guiding member 14d according to the longitudinal axis of the desiccant container 10.

The first and the second guiding member 14c, 14d extending, in a mounted state, from the container cover 14a in a direction of the desiccant 18 and accordingly immerse the desiccant 18 in an axial direction.

The desiccant container 10 is included, in a mounted state, in the air dryer cartridge 12 such that it is formed as an insert being inserted into the air dryer cartridge 12 in the mounted state.

The function of the inventive desiccant container 10 is as follows:
In the mounted state, an air gab (not shown) between the air dryer cartridge 12 and the desiccant container 10 is provided, by which the pressurized air may flow from the bottom of the cartridge housing to its top where it enters the container cover 14a.

The container cover 14a comprises a plurality of through holes in order to let the air pass through the container cover 14a.

The air then directly flows to the desiccant 18 at the annular space between the second guiding member 14d and the corresponding lateral wall portion of the desiccant container housing 14.

Additionally, the air centrally flows from the container cover 14a through supporting member 20d to the pretension piston 20b that also has a plurality of through holes in order to let the air flow through the pretension piston 20b into the desiccant 18 as well.

The desiccant 18 is hold appropriately in space by the pretension piston 20b being pressed directly against or into the desiccant 18 via the pretension force of the spring 20c.

In turn, the spring 20c is supported at the supporting member 20d and thus generates an axial force that presses the pretension piston 20b into the desiccant 18.

As the desiccant beads have a sufficiently small diameter, they behave, as a reaction to a pretension force, as a quasi-fluid.

According to the invention, as the pretension area 20a of the pretension piston 20b is smaller than the internal cover area 14b and due to the quasi-fluidic behaviour of the beads, some of the beads are not just pushed or tensioned in the direction of pretension force.

Accordingly, some desiccant beads at the outer radial regions of the accommodation volume (the second part of the desiccant beads) are pushed into an opposite direction, namely the second direction D2, against the top 16d of the accommodation volume 16 of the desiccant container 10 at the annular space as mentioned above.

This behaviour enables a overalls and sufficient pretension of all beads although they are not pretensioned according to the whole and possible pretension area of the container cover 14a (see discussion above).

Finally, the air the passes the bottom 16c (also permeable to air) of the accommodation volume 16 and flows then centrally out of the desiccant container 10 and out the air dryer cartridge 12 and then enter into the air treatment device (not shown in Fig. 1).

### REFERENCE SIGNS

- 10: desiccant container
- 12: air dryer cartridge
- 14: housing
- 14a: container cover
- 14b: internal cover area
- 14c: first guiding member
- 14d: second guiding member
- 16: accommodation volume
- 16a: accommodation area
- 16b: accommodation height
- 16c: bottom of accommodation volume
- 16d: top of accommodation volume
- 18: desiccant
- 20: pretension device
- 20a: pretension area
- 20b: pretension piston
- 20c: spring
- 20d: supporting member
- 20e: piston plate
- 20f: piston guiding section
- 20g: lateral wall
- 20h: first collar
- 20i: second collar

- D1: first pretension direction
- D2: second pretension direction

## Claims

1. A desiccant container (10) for an air dryer cartridge (12) for a vehicle, especially utility vehicle, with at least one housing (14); with at least one accommodation volume (16) for accommodating at least one desiccant (18) comprising a plurality of desiccant beads, wherein the desiccant container (10) comprises at least one container cover (14a); and with at least one pretension device (20) supported at the container cover (14a), wherein the pretension device (20) comprises at least one pretension area (20a) for pretension, in a mounted state, at least one first part of the desiccant beads according to a first pretension direction (D1) and for pretension at least one second part of the desiccant beads according to a second pretension direction (D2) being opposite so the first pretension direction.

2. The desiccant container (10) according to claim 1,
**characterized in that**
container cover (14a) comprises, in the mounted state, at least one internal cover area (14b) facing in a direction of the desiccant (18), wherein the pretension area (20a) is smaller than the internal cover area (14b).

3. The desiccant container (10) according to claim 1 or claim 2,
**characterized in that**
the pretension device (20) comprises at least one pretension piston (20b), at least one spring (20c) and at least one supporting member (20d), wherein, in a mounted state, the spring (20c) is arranged between the pretension piston (20b) and the supporting member (20d).

4. The desiccant container (10) according to one of the preceding claims,
**characterized in that**
the container cover (14a) comprises at least one first guiding member (14c) and/or at least one second guiding member (14d) for axially guiding the pretension piston (20b) according to a longitudinal axis of the desiccant container (10).

5. The desiccant container (10) according to claim 4,
**characterized in that**
the first guiding member (14c) is formed as a hollow cylinder and the second guiding member (14d) is formed as a hollow cylinder, wherein first and second guiding member (14d) are arranged coaxially or eccentrically with each other.

6. The desiccant container (10) according to claim 4 or claim 5,
**characterized in that**
the first guiding member (14c) and the second guiding member (14d) extending, in a mounted state, from the container cover (14a) in a direction of the desiccant (18).

7. The desiccant container (10) according to one of the preceding claims 3 to 6,
**characterized in that**
the pretension piston (20b) comprises at least one piston plate (20e) for directly contacting and pretension the desiccant (18) via the pretension area (20a) and comprises at least one piston guiding section (20f) protruding from the piston plate (20e) and extending, in a mounted state, in a direction of the container cover (14a).

8. The desiccant container (10) according to claim 7,
**characterized in that**
the piston plate (20e) comprises at least one lateral wall (20g) forming a guiding surface for axial guiding the piston plate (20e) according to the longitudinal axis of the desiccant (18) container (14).

9. The desiccant container (10) according to claim 7 or claim 8,
**characterized in that**
the piston guiding section (20f) is accommodated and axially guided by the first guiding member (14c) according to the longitudinal axis of the desiccant container (10).

10. The desiccant container (10) according to claim 8 or claim 9,
**characterized in that**
the lateral wall (20g) is accommodated and axially guided by the second guiding member (14d) according to the longitudinal axis of the desiccant container (10).

11. The desiccant container (10) according to one of the preceding claims 4 to 10,
**characterized in that**
the second guiding member (14d) comprises at least one end facing away from the container cover (14a), wherein a plurality of guiding legs protrudes from this end into the accommodation volume.

12. An air dryer cartridge for an air treatment device for a vehicle, especially utility vehicle, with at least one desiccant container (10) according to one of the preceding claims.

13. An air treatment device for a vehicle, especially utility vehicle, with at least one desiccant container (10) according to one of the preceding claims 1 to 11 and with at least one air dryer cartridge according to claim 12.
